**Europäisches Patentamt**

**European Patent Office**

**Office européen des brevets**

(19)

(11) Veröffentlichungsnummer **0 044 393**
**B1**

(12)

# EUROPÄISCHE PATENTSCHRIFT

(45) Veröffentlichungstag der Patentschrift:
**19.09.84**

(21) Anmeldenummer: **81104195.3**

(22) Anmeldetag: **02.06.81**

(51) Int. Cl.³ **C 08 F 220/28**, C 08 F 220/12,
C 09 D 3/81 // (C08F220/28,
220/12, 220/12, 212/00,
220/28),(C08F220/12, 220/28,
220/12, 212/00, 220/28)

(54) **Verfahren zur Herstellung eines Hydroxylgruppen aufweisenden, mit epsilon-Caprolacton modifizierten (Meth)acrylatharzes.**

(30) Priorität: **23.07.80 DE 3027776**

(43) Veröffentlichungstag der Anmeldung:
**27.01.82 Patentblatt 82/4**

(45) Bekanntmachung des Hinweises auf die Patenterteilung:
**19.09.84 Patentblatt 84/38**

(84) Benannte Vertragsstaaten:
**AT BE CH DE FR GB IT LI NL SE**

(56) Entgegenhaltungen:
**US - A - 4 082 816**

(73) Patentinhaber: **Degussa Aktiengesellschaft,
Weissfrauenstrasse 9, D-6000 Frankfurt am Main 1 (DE)**

(72) Erfinder: **Aldinger, Werner, Dr. Dipl.-Chem., Im
Hamelfang 10, D-6463 Freigericht-Horbach (DE)**
Erfinder: **Anzt, Helmut, Dr. Dipl.-Chem.,
Pfaffenbrunnenstrasse 44, D-6450 Hanau 7 (DE)**
Erfinder· **Morlock, Gerhard, Dr. Dipl.-Chem.,
Wildaustrasse 3, D-6450 Hanau 9 (DE)**
Erfinder: **Schaufler, Hans-Peter, Dr. Dipl.-Chem.,
Taunusstrasse 32, D-6450 Hanau 9 (DE)**

## Beschreibung

Gegenstand der Erfindung ist ein Verfahren zur Herstellung eines Hydroxylgruppen aufweisenden, mit ε-Caprolacton modifizierten, mit mehrwertigen Isocyanaten vernetzbaren (Meth)acrylatharzes.

Aus der US-PS 4 082 816 ist bereits ein Verfahren zur Herstellung eines Hydroxylgruppen aufweisenden, mit ε-Caprolacton modifizierten (Meth)acrylatharzes bekannt. Bei diesem bekannten Verfahren wird eine Mischung aus 60 bis 98 Gewichtsprozent mindestens eines Monomeren aus der Gruppe Styrol, .ι-Alkylstyrol und niedere Alkylester der Acryl- oder Methacrylsäure und aus 40 bis 2 Gewichtsprozent mindestens eines Hydroxyalkylesters der Acryl- oder Methacrylsäure zusammen mit ε-Caprolacton in solcher Menge, daß 0,25 bis 15 Mole ε-Caprolacton auf ein OH-Äquivalent der Monomermischung entfallen, in Gegenwart eines radikalischen Katalysators und eines Polymerisationskatalysators für das ε-Caprolacton, vorteilhafterweise in Lösung in einem üblichen Lösungsmittel, polymerisiert.

Werden die nach dem bekannten Verfahren hergestellten (Meth)acrylatharze mit einem verätherten Melamin-Formaldehydharz vermischt und auf einem Tiefziehblech durch Einbrennen vernetzt, so ist die Haftung der Lackschicht auf dem Untergrund, ausgedrückt durch den Gitterschnitt-Kennwert nach DIN 53 151, recht unbefriedigend. Die Haftung der Lackschicht auf dem Untergrund wird zwar etwas besser, wenn man anstelle eines verätherten Melamin-Formaldehyd-Harzes ein an sich bekanntes Vernetzungsmittel für Hydroxylgruppen aufweisende (Meth)acrylatharze auf der Grundlage von mehrwertigen Isocyanaten verwendet, ist aber immer noch in vielen Fällen unzureichend.

Das erfindungsgemäße Verfahren ist nun dadurch gekennzeichnet, daß man

1. mindestens einen Monoester der Acryl- oder Methacrylsäure mit einem Alkandiol mit 2 bis 4 Kohlenstoffatomen im molaren Verhältnis von 1,5 : 1 bis 1 : 3 mit ε-Caprolacton bei einer Temperatur zwischen 60 und 130° C in Gegenwart von 0,005 bis 0,15 Gewichtsprozent, bezogen auf das Gewicht des eingesetzten ε-Caprolactons, einer als Katalysator für die Umsetzung von Hydroxylgruppen aufweisenden Verbindungen mit ε-Caprolacton an sich bekannten Organozinnverbindung zur Reaktion bringt und

2. a) 15 bis 55 Gewichtsprozent des nach 1. erhaltenen Adduktes mit
   b) 45 bis 85 Gewichtsprozent eines Monomerengemisches, welches seinerseits zusammengesetzt ist aus, jeweils bezogen auf das Gewicht der Komponente b),
      $b_1$) 10 bis 90 Gewichtsprozent mindestens eines Esters der Methacrylsäure, dessen Homopolymerisat eine Glasübergangstemperatur von über 60° C aufweist,
      $b_2$) 10 bis 90 Gewichtsprozent mindestens eines Esters der Acryl- oder Methacrylsäure, dessen Homopolymerisat eine Glasübergangstemperatur unter 60° C aufweist,
      $b_3$) 0 bis 35 Gewichtsprozent mindestens eines Vinylaromaten und
      $b_4$) 0 bis 10 Gewichtsprozent mindestens eines Monoesters der Acryl- oder Methacrylsäure mit einem Alkandiol mit 2 bis 4 Kohlenstoffatomen

   als Lösung in
   c) 24,76 bis 66,67 Gewichtsprozent, bezogen auf das Gesamtgewicht der Komponenten a) und b), mindestens eines für Lacke auf (Meth)acrylatharz-Basis üblichen und gegenüber Isocyanaten inerten Lösungsmittels in Gegenwart mindestens eines an sich bekannten, thermisch in Radikale zerfallenden Katalysators

   copolymerisiert.

Während bei dem aus der US-PS 4 082 816 bekannten Verfahren die radikalische Polymerisation des Monomerengemisches und die Umsetzung mit dem ε-Caprolacton nach Art einer »Eintopf-Reaktion« gleichzeitig vorgenommen wird, muß beim erfindungsgemäßen Verfahren zunächst getrennt ein Addukt aus einem Hydroxyalkyl(meth)acrylat und aus ε-Caprolacton hergestellt werden, das dann in einer zweiten Stufe als »Monomeres« zusammen mit den anderen Monomeren radikalisch polymerisiert wird. Überraschenderweise erhält man dabei ein (Meth)acrylatharz, das nach Zusatz eines mehrwertigen Isocyanats, Auftragen auf ein Substrat und Einbrennen eine Lackschicht mit ausgezeichneter Haftung auf dem Untergrund ergibt.

In der ersten Stufe des erfindungsgemäßen Verfahrens wird mindestens ein Monoester der Acryl- oder Methacrylsäure mit einem Alkandiol mit 2 bis 4 Kohlenstoffatomen im molaren Verhältnis von 1,5 : 1 bis 1 : 3 mit ε-Caprolacton zur Reaktion gebracht. Geeignete Ester sind beispielsweise die 2-Hydroxyäthylester, 2-Hydroxypropylester und 4-Hydroxybutylester der Acryl- oder Methacrylsäure. Die Umsetzung erfolgt bei einer Temperatur zwischen 60 und 130° C und in Gegenwart von 0,005 bis 0,15 Gewichtsprozent, bezogen auf das Gewicht des eingesetzten ε-Caprolactons, einer an sich bekannten Organozinnverbindung. Geeignete Organozinnverbindungen sind beispielsweise Dibutylzinnoxid, Dioctylzinnoxid, Dibutylzinndilaurylmercaptid, Dibutylzinnglykolat, Dibutylzinndiacetat, Dioctylzinndiacetat, Dilaurylzinndiacetat, Dibutylzinndilaurat oder Dibutylzinnmaleat. Die Umsetzung erfolgt zweckmäßigerweise in Abwesenheit eines zusätzlichen Lösungsmittels in der Weise, daß man den Hydroxyester zusammen mit der Organozinnverbindung vorlegt und das ε-Caprolacton langsam zudosiert. Vorteilhaft ist es, wenn man nach beendeter Zudosierung das Reaktionsgemisch noch 2 bis 3 Stunden auf der Reaktionstemperatur hält. Empfehlenswert ist es ferner, zur Vermeidung einer thermisch initiierten Polymerisation Luft durch das Reaktionsgemisch zu leiten.

Das so erhaltene Addukt erfordert keinerlei Aufarbeitung, sondern kann vielmehr direkt zu einem (Meth)acrylatharz weiterverarbeitet werden. Da es für längere Zeit lagerbeständig ist, kann es aber auch vor der Weiterverarbeitung zwischengelagert werden. Dadurch wird es möglich, dieses Addukt wie andere Monomere auf Vorrat herzustellen.

In der zweiten Stufe des erfindungsgemäßen Verfahrens werden dann 15 bis 55 Gewichtsprozent, vorzugsweise 30 bis 55 Gewichtsprozent, des Adduktes aus dem Hydroxyester und dem ε-Caprolacton mit 45 bis 85 Gewichtsprozent, vorzugsweise 45 bis 70 Gewichtsprozent, eines Gemisches aus weiteren Monomeren vereinigt und als Lösung in 24,76 bis 66,67 Gewichtsprozent, bezogen auf das Gesamtgewicht des Adduktes und des Monomerengemisches, mindestens eines für Lacke auf (Meth)acrylatharz-Basis üblichen und gegenüber Isocyanaten inerten Lösungsmittels bei einer erhöhten Temperatur, vorzugsweise zwischen 80 und 150°C, in Gegenwart mindestens eines an sich bekannten, thermisch in Radikale zerfallenden Katalysators copolymerisiert.

Wird das Addukt aus dem Hydroxyester und dem ε-Caprolacton in einer Menge nahe der unteren Grenze des genannten Bereichs, beispielsweise von 15 bis 30 Gewichtsprozent, eingesetzt, so erhält man ein (Meth)acrylatharz mit einem relativ geringen Gehalt an Hydroxylgruppen. Dadurch kann die Menge des für die Vernetzung notwendigen mehrwertigen Isocyanats entsprechend niedrig gehalten werden, was die Formulierung von besonders kostengünstigen Einbrennlacken ermöglicht. Überraschenderweise sind die eingebrannten Lackfilme schon ab einem Hydroxylgruppengehalt des (Meth)acrylatharzes von 0,95 Gewichtsprozent gegen Benzin beständig.

Wird dagegen das Addukt aus dem Hydroxyester und dem ε-Caprolacton in einer Menge nahe der oberen Grenze des genannten Bereichs, beispielsweise von 40 bis 55 Gewichtsprozent, eingesetzt, so hat das den Vorteil, daß man selbst bei Verwendung von cycloaliphatischen Polyisocyanaten auf der Grundlage des Isophorondiisocyanats als Vernetzer Einbrennlacke erhält, die noch sehr flexible eingebrannte Lackfilme ergeben.

Das zu verwendende Gemisch aus weiteren Monomeren setzt sich seinerseits zusammen aus 10 bis 90 Gewichtsprozent, vorzugsweise 30 bis 70 Gewichtsprozent, mindestens eines Esters der Methacrylsäure, dessen Homopolymerisat eine Glasübergangstemperatur von über 60°C aufweist, 10 bis 90 Gewichtsprozent, vorzugsweise 30 bis 70 Gewichtsprozent, mindestens eines Esters der Acryl- oder Methacrylsäure, dessen Homopolymerisat eine Glasübergangstemperatur unter 60°C, vorzugsweise unter 0°C, aufweist, 0 bis 35 Gewichtsprozent mindestens eines Vinylaromaten und 0 bis 10 Gewichtsprozent mindestens eines Monoesters der Acryl- oder Methacrylsäure mit einem Alkandiol mit 2 bis 4 Kohlenstoffatomen, wobei sich die genannten Komponenten des Gemisches jeweils zu 100 Gewichtsprozent addieren müssen.

Geeignete Ester der Methacrylsäure, deren Homopolymerisate eine Glasübergangstemperatur von über 60°C aufweisen, sind beispielsweise tert.-Butylmethacrylat Cyclohexylmethacrylat oder Neopentylmethacrylat, sowie das bevorzugt verwendete Methylmethycrylat. Werden diese Ester der Methacrylsäure in einer Menge nahe der oberen Grenze des genannten Bereiches, beispielsweise von 60 bis 90 Gewichtsprozent, eingesetzt, so lassen sich Einbrennlacke formulieren, die als eingebrannte Lackfilme eine besonders hohe Oberflächenhärte aufweisen.

Zu den Estern der Acryl- oder Methacrylsäure, deren Homopolymerisate eine Glasübergangstemperatur unter 60°C aufweisen, gehören viele Alkylester mit 2 bis 10, vorzugsweise 4 bis 10, Kohlenstoffatomen in der Alkoholkomponente. Beispiele sind Äthylacrylat, n-Butylacrylat, n-Hexylacrylat, 2-Äthylhexylacrylat, n-Octylacrylat und n-Decylacrylat, sowie die entsprechenden Ester der Methacrylsäure. Bevorzugt werden n-Butylacrylat und 2-Äthylhexylacrylat verwendet.

Geeignete Vinylaromaten sind neben dem bevorzugten Styrol beispielsweise auch α-Methylstyrol und die Vinyltoluole.

Als Monoester der Acryl- oder Methacrylsäure mit einem Alkandiol mit 2 bis 4 Kohlenstoffatomen können die gleichen verwendet werden wie bei der Herstellung des Adduktes mit dem ε-Caprolacton, also beispielsweise die 2-Hydroxyäthylester, 2-Hydroxypropylester oder 4-Hydroxybutylester. Bevorzugt wird das 2-Hydroxyäthylacrylat eingesetzt.

Das für die Durchführung der radikalischen Polymerisation verwendeten Lösungsmittel stellt später dann auch das Lösungsmittel für den fertigen Lack dar und muß infolgedessen gegenüber Isocyanaten inert sein. Geeignete Lösungsmittel sind z. B. Ester, wie Äthylglykolacetat, n-Butylglykolacetat, Äthylacetat oder n-Butylacetat; Ketone, wie Methyläthylketon oder Methylisobutylketon; aromatische Kohlenwasserstoffe, wie Toluol, die Xylole oder handelsübliche Gemische aromatischer Kohlenwasserstoffe mit einem Siedebereich zwischen etwa 150 und etwa 186°C. In vielen Fällen ist es vorteilhaft, eine Mischung aus mehreren Lösungsmitteln zu verwenden, beispielsweise aus aromatischen Kohlenwasserstoffen und Äthylglykolacetat oder n-Butylacetat.

Wird die radikalische Polymerisation in relativ konzentrierter Lösung vorgenommen, so ist es zweckmäßig, als Initiator einen bekannten, thermisch in Radikale zerfallenden Katalysator mit einer Halbwertszeit zwischen 0,3 und 0,7 Stunden bei 130°C zu verwenden, beispielsweise tert.-Butylperbenzoat, tert.-Butylperacetat oder 2,5-Dimethylhexyl-2,5-diperbenzoat. Vorzugsweise wird der Initiator in einer Menge von 3,0 bis 5,0 Gewichtsprozent, bezogen auf das Gesamtgewicht der polymerisierbaren

3

Substanzen, also des ε-Caprolacton-Adduktes und der übrigen Monomeren, eingesetzt.

Wird dagegen das Lösungsmittel in größerer Menge eingesetzt, so ist es vorteilhafter, als Initiator einen bekannten, thermisch in Radikale zerfallenden Katalysator mit einer Halbwertszeit zwischen 0,005 und 0,7 Stunden bei 100°C zu verwenden. Solche Katalysatoren sind beispielsweise Azoisobutyronitril, Lauroylperoxid, Succinylperoxid, Benzoylperoxid, p-Chlorbenzoylperoxid oder tert.-Butylperoxy-2-äthylhexanoat. Vorzugsweise wird der Initiator in einer Menge von 1,5 bis 3,0 Gewichtsprozent, bezogen auf das Gesamtgewicht der polymerisierbaren Substanzen, eingesetzt.

Die radikalische Polymerisation kann beispielsweise so vorgenommen werden, daß man das Lösungsmittel vorlegt und unter Durchleiten von Stickstoff auf die Polymerisationstemperatur erhitzt. Dann wird innerhalb von 2 bis 6 Stunden das Gemisch der polymerisierbaren Substanzen, welches den Katalysator oder die Hauptmenge des Katalysators enthält, langsam zudosiert. Zur Vermeidung eines unerwünscht hohen Gehalts an Restmonomeren kann es vorteilhaft sein, einen kleineren Teil des Katalysators erst nach beendeter Zudosierung der polymerisierbaren Substanzen auf einmal dem Polymerisationsgemisch zuzusetzen und dieses noch eine gewisse Zeit, beispielsweise 1 bis 2 Stunden, auf die Polymerisationstemperatur zu erhitzen.

Werden nur relativ geringe Mengen an Lösungsmittel eingesetzt, so kann unter Umständen die letztgenannte Arbeitsweise, also die nachträgliche Zugabe einer Teilmenge des Katalysators auf einmal, dazu führen, daß die gebildete konzentrierte Copolymerisatlösung eine unerwünscht hohe Viskosität aufweist. In diesem Falle ist es daher vorteilhafter, einen unerwünscht hohen Gehalt an Restmonomeren dadurch zu vermeiden, daß man zwar dem Gemisch der polymerisierbaren Substanzen die Gesamtmenge an Katalysator zusetzt, aber ein Gemisch aus einem Katalysator mit niedriger und aus einem Katalysator mit höherer Halbwertszeit verwendet. Solche Gemische können beispielsweise aus a) einem Diacylperoxid oder einem Perester und b) einem Alkylhydroperoxid oder einem Dialkylperoxid bestehen. Besonders geeignet sind solche Gemische, bei denen die eine Komponente eine Halbwertszeit von 0,02 bis 0,7 Stunden und die andere Komponente eine Halbwertszeit von 1 bis 6 Stunden, jeweils bei 130°C, aufweist. Bevorzugt werden die Gemische tert.-Butylperoxy-2-äthylhexanoat/Di-tert.-butylperoxid; Dibenzoylperoxid/Dicumylperoxid; tert.-Butylperbenzoat/Di-tert.-butylperoxid; tert.-Butylperacetat/tert.-Butylcumylperoxid und tert.-Butylperbenzoat/Di-tert.-butylperoxid. Vorzugsweise wird die Komponente mit der niedrigeren Halbwertszeit in einer Menge von 2,0 bis 3,0 Gewichtsprozent und die Komponente mit der höheren Halbwertszeit in einer Menge von 1,0 bis 2,5 Gewichtsprozent, jeweils bezogen auf das Gesamtgewicht der polymerisierbaren Substanzen, eingesetzt.

Es ist bekannt, daß Polymerisate mit gleichem mittleren Molekulargewicht (Zahlenmittel), aber verschiedener molekularer Uneinheitlichkeit unterschiedliche Lösungsviskositäten aufweisen. Das Polymerisat mit der größeren Uneinheitlichkeit weist immer eine höhere Lösungsviskosität auf, da die hochmolekularen Anteile einen wesentlich größeren Beitrag zur Viskosität liefern als die gleiche Menge an niedermolekularen Anteilen. Eine breite Molekulargewichtsverteilung bedeutet außerdem, daß die Anzahl der Reaktivgruppen pro Molekül und damit die Reaktivität der einzelnen Ketten sehr unterschiedlich ist. Vor allem gegen Ende der Polymerisation können chemisch sehr uneinheitliche Polymerketten entstehen, die zu Unverträglichkeitserscheinungen bzw. Störungen in den später herzustellenden Lackfilmen führen können.

Daher ist es sinnvoll, Molekulargewichtsregler zu verwenden, welche die Breite der Molekulargewichtsverteilung einengen. Die Wirksamkeit der Molekulargewichtsregler ist allerdings auf einen bestimmten Temperaturbereich begrenzt. Bei Polymerisationstemperaturen über 130°C lassen sich auch bei Verwendung von hohen Konzentrationen an Molekulargewichtsreglern nur sehr uneinheitliche Polymerisate herstellen. Hohe Polymerisationstemperaturen haben gewöhnlich nur eine Verschiebung des mittleren Molekulargewichts der Polymerisate zur Folge. Nur eine hohe Initiatorkonzentration, die kontinuierlich und gleichzeitig mit einer entsprechenden Monomermenge im Reaktionsgefäß vorliegt, erlaubt eine Polymerisation unter stationären Bedingungen, die zu molekulareinheitlichen Polymerisaten führt.

Als Molekulargewichtsregler lassen sich für niedere Reaktionstemperaturen thiolgruppenhaltige Verbindungen, wie Mercaptomono- und -dicarbonsäuren in Form von Mercaptoessigsäure, 2-Mercaptopropionsäure, 2-Mercaptobenzoesäure und Mercaptoisophthalsäure, die Methyl- und Äthylester der Thioglykolsäure, Thioglykolsäureisooctylester, Thioglykolsäurelaurylester, Mercaptoäthanol oder n-Dodecylmercaptan verwenden.

Von den angeführten Thiolverbindungen eignen sich besonders das Mercaptoäthanol, da die von diesem gebildeten Oxyäthylensulfidgruppen zu der Gesamtzahl der Hydroxylgruppen im Polymerisat beitragen, und das n-Dodecylmercaptan wegen seines nur schwachen Geruchs und seiner geringen Giftigkeit.

Die nach der radikalischen Polymerisation vorliegenden mehr oder weniger konzentrierten Copolymerisatlösungen können nun nach üblichen Verfahren zu Einbrennlacken weiterverarbeitet werden. So können ihnen übliche Hilfs- und Zusatzstoffe, wie Verlaufsmittel, beispielsweise Silikonöle, Mattierungsmittel, Antiabsetzmittel oder Entschäumungsmittel, sowie gegebenenfalls Pigmente, wie Titandioxid vom Rutiltyp, Zinksulfat, Lithopon, Zinksulfid, Zinkoxid, Antimonoxid, geeignete Ruße oder organische Pigmente, zugefügt werden.

4

Schließlich wird noch als Vernetzer ein mehrwertiges Isocyanat zugemischt. Für lichtechte Zweikomponentenlacke mit hoher Witterungsbeständigkeit sind nur aliphatische oder cycloaliphatische Polyisocyanate geeignet. Neben den monomeren können auch die dimeren und trimeren Formen, wie Uretdione, Biurete oder Isocyanurate eingesetzt werden.

Geeignete aliphatische Polyisocyanate sind Äthylendiisocyanat, Propylendiisocyanat, Tetramethy-lendiisocyanat, Hexamethylendiisocyanat, Trimethylhexamethylendiisocyanat und Lysindiisocyanat-methylester. Bevorzugt wird das aus Hexamethylendiisocyanat durch Umsetzung mit Wasser herstellbare höhermolekulare, Biuretgruppen enthaltende Polyisocyanat, welches nicht mehr flüchtig ist.

Geeignete cycloaliphatische Polyisocyanate sind 1,4-Dimethylcyclohexandiisocyanat, 1-Methylcy-clohexan-2,4-diisocyanat, 4,4'-Methylen-bis-(cyclohexyldiisocyanat), 3-Isocyanatomethyl-3,5,5-trime-thylcyclohexylisocyanat. Bevorzugt werden Isocyanurate auf der Grundlage des cycloaliphatischen Isophorondiisocyanats, welche in ihrer Funktionalität zwischen 3 und 4 liegen.

Die Geschwindigkeit der Vernetzungsreaktion zwischen den nach dem erfindungsgemäßen Verfahren hergestellten (Meth)acrylatharzen und den mehrwertigen Isocyanaten ist für manche praktische Anwendungsfälle zu gering. Zur Beschleunigung können dann Esteramine oder tertiäre Amine, wie Tributylamin, in Konzentrationen von 0,02 bis maximal 0,5 Gewichtsprozent, berechnet auf das Gewicht des festen (Meth)acrylatharzes und des Isocyanats, zugesetzt werden. Bei der Verwendung von cycloaliphatischen Polyisocyanaten werden zur Beschleunigung Kombinationen von Dibutylzinndilaurat und Calciumoctoat (Calcium-2-äthylhexanoat) empfohlen. Die zweckmäßige Einsatzmenge des Dibutylzinndilaurats liegt zwischen 0,01 und 1,0 Gewichtsprozent, die des Calciumoctoats zwischen 0,4 und 0,8 Gewichtsprozent, jeweils bezogen auf das Gewicht des festen (Meth)acrylatharzes und des Isocyanats.

Die mehrwertigen Isocyanate werden zweckmäßig in solchen Mengen eingesetzt, daß 0,9 bis 1,2, vorzugsweise 1,0 bis 1,1, Isocyanat-Gruppen auf jede Hydroxylgruppe des (Meth)acrylatharzes entfallen. Auf metallischen Untergründen werden optimale Eigenschaften der eingebrannten Lackschicht dann erhalten, wenn die beiden Komponenten in stöchiometrischem Verhältnis eingesetzt werden.

Der Gehalt der nach dem erfindungsgemäßen Verfahren hergestellten (Meth)acrylatharze an Hydroxylgruppen bewegt sich zwischen 0,51 und 6,3 Gewichtsprozent. In Fällen, in welchen gefordert werden muß, daß die eingebrannte Lackschicht auch gegen Lösungsmittel, insbesondere Kraftstoffe, beständig ist, sollte jedoch die Zusammensetzung der Ausgangsmischung für die radikalische Polymerisation so gewählt werden, daß der Gehalt des (Meth)acrylatharzes an Hydroxylgruppen mindestens 0,95 Gewichtsprozent beträgt.

Wenn der Copolymerisatlösung alle Zusatzstoffe einverleibt sind, wird die Mischung durch Zugabe von weiterem Lösungsmittel so eingestellt, daß die Auslaufzeit aus einem DIN-Becher mit 4 mm-Düse, gemessen bei 23° C, etwa 20 bis 40 Sekunden beträgt.

Der Lack kann dann durch Spritzen, Gießen, Walzen oder Rakeln in Schichtdicken von 30 bis 70 μm auf die verschiedenartigsten Substrate, insbesondere auf Metallbleche, aufgetragen werden. Nach kurzem, beispielsweise 10minütigem, staubfreien Ablüften wird der Lackfilm bei Temperaturen zwischen 80 und 150° C eingebrannt. Bevorzugt werden Einbrenntemperaturen zwischen 80 und 130° C bei Verwendung aliphatischer und zwischen 110 und 150° C bei Verwendung cycloaliphatischer Polyisocyanate. Die Dauer des Einbrennens soll zweckmäßigerweise etwa 15 bis 40 Minuten betragen.

Das erfindungsgemäße Verfahren, die Verwendung der dabei erhaltenen Copolymerisatlösung zur Herstellung von Lacken und die Eigenschaften der eingebrannten Lackfilme werden in den nachfolgenden Beispielen näher erläutert. Teile und Prozente bedeuten, sofern nichts anderes angegeben ist, jeweils Gewichtsteile und Gewichtsprozente.

Zur Beurteilung der mechanischen Eigenschaften der eingebrannten Lackfilme werden die allgemein üblichen Prüfungen vorgenommen.

## Beispiel 1

### a) Herstellung eines Adduktes aus 2-Hydroxyäthylacrylat und ε-Caprolacton

In einem mit Rührer, Thermometer, Tropftrichter, Rückflußkühler und regelbarer Heizung versehe-nen Reaktionsgefäß werden

50,41 Teile 2-Hydroxyäthylacrylat (stabilisiert mit 625 ppm Hydrochinonmonomethyläther) und
0,043 Teile Dibutylzinnoxid

vorgelegt. Unter intensivem Durchleiten von Luft wird auf 120° C erhitzt und es werden innerhalb von 2 Stunden

49,54 Teile ε-Caprolacton

über den Tropftrichter zudosiert.

Es wird noch 2 Stunden unter Rühren auf 120°C geheizt. Das gebildete Addukt kann ohne weitere Aufarbeitung zur anschließenden Copolymerisation eingesetzt werden.

b) Herstellung eines (Meth)acrylatharzes

In einem mit Rührer, Thermometer, Tropftrichter, Rückflußkühler und regelbarer Heizung versehenen Reaktionsgefäß werden

| | |
|---|---|
| 66,67 Teile | eines Lösungsmittelgemisches aus 2 Teilen Xylol, 1 Teil eines Gemisches aromatischer Kohlenwasserstoffe mit einem Siedebereich zwischen etwa 150 und 186°C (Shellsol A) und 1 Teil n-Butylacetat |

vorgelegt. Unter Durchleiten von Stickstoff wird auf 115°C erhitzt und es wird innerhalb von 3 Stunden ein Gemisch aus

| | |
|---|---|
| 36,5 Teilen | des nach a) erhaltenen Addukts |
| 25,0 Teilen | Methylmethacrylat |
| 35,0 Teilen | 2-Äthylhexylacrylat |
| 3,5 Teilen | 2-Hydroxyäthylacrylat und |
| 2,5 Teilen | tert.-Butylperoxy-2-äthylhexanoat |

zudosiert. Anschließend werden weitere

| | |
|---|---|
| 0,5 Teile | tert.-Butylperoxy-2-äthylhexanoat |

zugesetzt und es wird noch weitere 3 Stunden bei 150°C gerührt. Die gebildete 60%ige Copolymerisatlösung hat bei 25°C eine dynamische Viskosität von 920 m Pa · s.

c) Herstellung eines weißpigmentierten Lackes

| | |
|---|---|
| 100 Teile | der nach b) erhaltenen Copolymerisatlösung und |
| 60 Teile | eines Titandioxidpigments vom Rutiltyp |

werden auf einem Dreiwalzenstuhl angerieben. Die gebildete Dispersion wird mit

| | |
|---|---|
| 37 Teilen | einer 70%igen Lösung eines Isocyanurats auf der Grundlage des Isophorondiisocyanats (Handelsprodukt IPDI-T 1890 der Firma VEBA-Hüls) in einem Lösungsmittelgemisch aus 1 Teil Äthylglykolacetat und 2 Teilen Xylol (Gehalt an NCO-Gruppen 12,1—12,3%) und |
| 4 Teilen | einer 1%igen Lösung eines Silikonöls in Shellsol A |

versetzt und mit

| | |
|---|---|
| 15 Teilen | Xylol und |
| 15 Teilen | n-Butylacetat |

auf Spritzviskosität verdünnt.

d) Applikation des Lackes und Eigenschaften des eingebrannten Lackfilms

Der nach c) erhaltene Lack wird durch Spritzen auf doppelt decapierte Tiefziehbleche aufgetragen, während 10 Minuten staubfrei abgelüftet und 30 Minuten lang bei 150°C eingebrannt. Der etwa 40 μm dicke Lackfilm hatte folgende Eigenschaften:

| | |
|---|---|
| Tiefziehfestigkeit nach Erichsen (DIN 53 156): | 7,5 mm |
| Kugelschlagtiefung (ASTM D 2794-69): | >100 kg · cm |
| Gitterschnitt-Kennwert (DIN 53 151): | 0 |
| Pendelhärte nach König (DIN 53 157): | 162 Sekunden |
| Filmbeständigkeit gegen | |
| Deionisiertes Wasser (4 Wochen): | kein Angriff |
| Natronlauge (5%ig; 4 Wochen): | kein Angriff |
| Schwefelsäure (5%ig; 4 Wochen): | kein Angriff |
| Superbenzin (4 Wochen): | reversible Anweichung |
| Dieselöl (3 Monate): | reversible Anweichung |
| Äthanol (3 Monate): | reversible Anweichung |

**0 044 393**

Zur Überprüfung der Wetterechtheit wurde der Lackfilm im »Xenotest-Gerät 150« 2000 Stunden lang im Wendelauf (Zyklus: 5 Minuten beregnen, 25 Minuten regenfrei) geprüft. Dabei erfolgt keine Verfärbung des Lackfilms.

Beispiel 2

a) Herstellung eines Addukts aus 2-Hydroxyäthylacrylat und ℓ-Caprolacton

Es wird verfahren wie im Beispiel 1a).

b) Herstellung eines (Meth)acrylatharzes

In einem mit Rührer, Thermometer, Tropftrichter, Rückflußkühler und regelbarer Heizung versehenen Reaktionsgefäß werden

66,67 Teile    n-Butylacetat

vorgelegt. Unter Durchleiten von Stickstoff wird auf 120° C erhitzt und es wird innerhalb von 3 Stunden ein Gemisch aus

30,0 Teilen    des nach a) erhaltenen Addukts
42,0 Teilen    Methylmethacrylat
23,8 Teilen    2-Äthylhexylacrylat
4,2 Teilen    2-Hydroxyäthylacrylat und
2,5 Teilen    tert.-Butylperacetat

zudosiert. Anschließend werden weitere

0,5 Teile    tert.-Butylperacetat

zugesetzt und es wird noch weitere 2 Stunden bei 120° C gerührt.

c) Herstellung eines weißpigmentierten Lackes

100 Teile    der nach b) erhaltenen 60%igen Copolymerisatlösung und
60 Teile    eines Titandioxidpigments vom Rutiltyp

werden auf einem Dreiwalzenstuhl angerieben. Die gebildete Dispersion wird mit

25 Teilen    einer 75%igen Lösung eines polyfunktionellen aliphatischen Isocyanats auf der Grundlage des Hexamethylendiisocyanats (Handelsprodukt Desmodur N der Firma Bayer) in einem Lösungsmittelgemisch aus 1 Teil Äthylglykolacetat und 1 Teil Xylol (Gehalt an NCO-Gruppen 16,5%) und
4 Teilen    einer 1%igen Lösung eines Silikonöls in Shellsol A

versetzt und mit

25 Teilen    Xylol und
25 Teilen    n-Butylacetat

auf Spritzviskosität verdünnt.

d) Applikation des Lackes und Eigenschaften des eingebrannten Lackfilms

Der nach c) erhaltene Lack wird durch Spritzen auf doppelt decapierte Tiefziehbleche aufgetragen, während 10 Minuten staubfrei abgelüftet und 30 Minuten lang bei 110° C bzw. 150° C eingebrannt. Der etwa 30 µm dicke Lackfilm hatte, bei 110° C eingebrannt, eine Pendelhärte nach König von 156 Sekunden, bei 150° C eingebrannt, eine solche von 164 Sekunden. Alle anderen Lackeigenschaften waren bei beiden Einbrenntemperaturen gleich:

7

| Tiefziehfestigkeit nach Erichsen: | 8,5 mm |
|---|---|
| Kugelschlagtiefung: | 100 kg · cm |
| Gitterschnitt-Kennwert: | 0 |

Die Beständigkeit des Lackfilms gegen Chemikalien bzw. Lösungsmittel und die Wetterechtheit entsprachen den Angaben im Beispiel 1 d).

Beispiel 3

a) Herstellung eines Addukts aus 2-Hydroxyäthylacrylat und ε-Caprolacton

In einem mit Rührer, Thermometer, Tropftrichter, Rückflußkühler und regelbarer Heizung versehenen Reaktionsgefäß werden

| 55,0 Teile | 2-Hydroxyäthylacrylat (stabilisiert mit 700 ppm Hydrochinonmonomethyläther) und |
|---|---|
| 0,059 Teile | Dibutylzinnoxid |

vorgelegt. Unter intensivem Durchleiten von Luft wird auf 110° C erhitzt und es werden innerhalb von 1 Stunde

45,94 Teile    ε-Caprolacton

über den Tropftrichter zudosiert. Es wird noch 3 Stunden unter Rühren auf 110° C geheizt.

b) Herstellung eines (Meth)acrylatharzes

In einem mit Rührer, Thermometer, Tropftrichter, Rückflußkühler und regelbarer Heizung versehenen Reaktionsgefäß werden

33,33 Teile    eines Lösungsmittelgemisches aus 1 Teil Äthylglykolacetat und 4 Teilen Shellsol A

vorgelegt. Unter Durchleiten von Stickstoff wird auf 145° C erhitzt und es wird innerhalb von 5 Stunden ein Gemisch aus

| 40,0 Teilen | des nach a) erhaltenen Addukts |
|---|---|
| 30,0 Teilen | Methylmethacrylat |
| 30,0 Teilen | 2-Äthylhexylacrylat und |
| 3,5 Teilen | tert.-Butylperbenzoat |

zudosiert. Anschließend werden weitere

0,5 Teile    tert.-Butylperbenzoat

zugesetzt und es wird noch eine weitere Stunde lang bei 145° C gerührt. Die gebildete 75%ige Copolymerisatlösung hat bei 25° C eine dynamische Viskosität von 2900 m Pa · s.

c) Herstellung eines weißpigmentierten Lackes

| 100 Teile | der nach b) erhaltenen Copolymerisatlösung und |
|---|---|
| 70 Teile | eines Titandioxidpigments vom Rutiltyp |

werden durch 30minütiges Mahlen auf einer Perlmühle homogenisiert. Die erhaltene Dispersion wird mit

| 56 Teilen | der im Beispiel 1 c) verwendeten Polyisocyanat-Lösung und |
|---|---|
| 2 Teilen | einer 1%igen Lösung eines Silikonöls in Shellsol A |

versetzt und mit

| 30 Teilen | Xylol und |
|---|---|
| 35 Teilen | n-Butylacetat |

auf Spritzviskosität verdünnt.

d) Applikation des Lackes und Eigenschaften des eingebrannten Lackfilms

Der nach c) erhaltene Lack wird durch Spritzen auf doppelt decapierte Tiefziehbleche aufgetragen, während 10 Minuten staubfrei abgelüftet und 30 Minuten lang bei 150° C eingebrannt. Der etwa 35 μm dicke Lackfilm hatte folgende Eigenschaften:

| | |
|---|---|
| Tiefziehfestigkeit nach Erichsen: | 8,0 mm |
| Kugelschlagtiefung: | > 100 kg · cm |
| Gitterschnitt-Kennwert: | 0 |
| Pendelhärte nach König: | 160 Sekunden |

Die Beständigkeit des Lackfilms gegen Chemikalien bzw. Lösungsmittel und die Wetterechtheit entsprachen den Angaben im Beispiel 1 d).

Vergleichsversuch 1

Zum Vergleich werden die im voranstehenden Beispiel 3 eingesetzten Monomeren im dort angewandten Gewichtsverhältnis nach dem aus dem Beispiel 4 der US-PS 4 082 816 bekannten Verfahren copolymerisiert:
In einem mit Rührwerk, Thermometer, Tropftrichter, Rückflußkühler und regelbarer Heizung verse-henen Reaktionsgefäß werden

| | |
|---|---|
| 49,0 Teile | Xylol und |
| 0,01 Teile | Tetraisopropyltitanat |

vorgelegt und unter Rückfluß zum Sieden erhitzt.
Innerhalb von 4 Stunden wird eine Mischung aus

| | |
|---|---|
| 10,9 Teilen | 2-Hydroxyäthylacrylat |
| 9,1 Teilen | ε-Caprolacton |
| 15,0 Teilen | Methylmethacrylat |
| 15,0 Teilen | 2-Äthylhexylacrylat und |
| 1,0 Teil | Di-tert.-butylperoxid |

zudosiert. Während der Zudosierung und anschließend noch weitere 3,5 Stunden wird das Reaktionsgemisch unter Rückfluß erhitzt.
Die gebildete 50%ige Copolymerisatlösung hat bei 25°C eine dynamische Viskosität von 128 m Pa · s.

| | |
|---|---|
| 100 Teile | dieser Copolymerisatlösung und |
| 50 Teile | eines Titandioxidpigments vom Rutiltyp |

werden durch 30minütiges Mahlen auf einer Perlmühle homogenisiert. Die erhaltene Dispersion wird mit

| | |
|---|---|
| 2 Teilen | einer 1%igen Lösung eines Silikonöls in Xylol |

und alternativ mit

| | | |
|---|---|---|
| a) | 32,5 Teilen | der im Beispiel 3 c) verwendeten Polyisocyanat-Lösung, |
| b) | 30,0 Teilen | eines butylverätherten Melamin-Formaldehyd-Harzes (Maprenal 80/15) und |
| c) | 25,0 Teilen | Hexamethylolmelamin (Cymel 301) |

versetzt. Die so erhaltenen Lacke werden durch Spritzen auf doppelt decapierte Tiefziehbleche aufgetragen, während 10 Minuten staubfrei abgelüftet und 30 Minuten lang bei 150° C eingebrannt. Die Lackfilme hatten folgende Eigenschaften:

|  | a) | b) | c) |
|---|---|---|---|
| Schichtdicke | 26 μm | 34 μm | 32 μm |
| Tiefziehfestigkeit nach Erichsen | 6,0 mm | 4,5 mm | 1,5 mm |
| Kugelschlagtiefung | 80 kg · cm | 60 kg · cm | 5 kg · cm |
| Gitterschnitt-Kennwert | 1—2 | 2—3 | 4 |
| Pendelhärte nach König | 141 Sek. | 120 Sek. | 131 Sekunden |

Vergleichsversuch 2

Der Vergleichsversuch 1 wird wiederholt mit dem Unterschied, daß anstelle von Xylol das Lösungsmittelgemisch des Beispiels 3, anstelle von Tetraisopropyltitanat Dibutylzinnoxid und anstelle von Di-tert.-butylperoxid tert.-Butylperbenzoat verwendet werden:

In einem mit Rührwerk, Thermometer, Tropftrichter, Rückflußkühler und regelbarer Heizung versehenen Reaktionsgefäß werden

39,2 Teile Shellsol A
9,8 Teile Äthylglykolacetat und
0,0117 Teile Dibutylzinnoxid

vorgelegt und unter Rückfluß zum Sieden erhitzt. Innerhalb von 4 Stunden wird eine Mischung aus

10,9 Teilen 2-Hydroxyäthylacrylat ·
9,1 Teilen ε-Caprolacton
15,0 Teilen Methylmethacrylat
15,0 Teilen 2-Äthylhexylacrylat und
1,0 Teilen tert.-Butylperbenzoat

zudosiert. Während der Zudosierung und anschließend noch weitere 3,5 Stunden wird das Reaktionsgemisch unter Rückfluß erhitzt.

100 Teile der so erhaltenen 50%igen Copolymerisatlösung und
50 Teile eines Titandioxidpigments vom Rutiltyp

werden durch 30minütiges Mahlen auf einer Perlmühle homogenisiert. Die erhaltene Dispersion wird mit

2 Teilen einer 1%igen Lösung eines Silikonöls in Shellsol A

und allternativ mit

a) 32,5 Teilen der im Beispiel 3 c) verwendeten Polyisocyanat-Lösung,
b) 30,0 Teilen eines butylverätherten Melamin-Formaldehyd-Harzes (Maprenal 80/15) und
c) 25,0 Teilen Hexamethylolmelamin (Cymel 301)

versetzt. Die so erhaltenen Lacke werden durch Spritzen auf doppelt decapierte Tiefziehbleche aufgetragen, während 10 Minuten staubfrei abgelüftet und 30 Minuten lang bei 150°C eingebrannt. Die Lackfilme hatten folgende Eigenschaften:

|  | a) | b) | c) |
| --- | --- | --- | --- |
| Schichtdicke | 35 µm | 22 µm | 35 µm |
| Tiefziehfestigkeit nach Erichsen | 5 mm | 5 mm | 1 mm |
| Kugelschlagtiefung | 30 kg · cm | 40 kg · cm | 5 kg · cm |
| Gitterschnitt-Kennwert | 1—2 | 2—3 | 4 |
| Pendelhärte nach König | 154 Sek. | 110 Sek. | 126 Sekunden |

### Beispiel 4

#### a) Herstellung eines Adduktes aus 2-Hydroxyäthylmethacrylat und ε-Caprolacton

In einem mit Rührer, Thermometer, Tropftrichter, Rückflußkühler und regelbarer Heizung versehenen Reaktionsgefäß werden

59,7 Teile 2-Hydroxyäthylmethacrylat (stabilisiert mit 395 ppm Hydrochinonmonomethyläther) und
0,025 Teile Dioctylzinnoxid

vorgelegt. Unter intensivem Durchleiten von Luft wird auf 125° C erhitzt und es werden innerhalb von 3 Stunden

40,27 Teile ε-Caprolacton

über den Tropftrichter zudosiert.
Es wird noch 2 Stunden unter Rühren auf 125° C geheizt.

#### b) Herstellung eines (Meth)acrylatharzes

In einem mit Rührer, Thermometer, Tropftrichter, Rückflußkühler und regelbarer Heizung versehenen Reaktionsgefäß werden

26,0 Teile eines Lösungsmittelgemisches aus 1 Teil Äthylglykolacetat und 4 Teilen Shellsol A

vorgelegt. Unter Durchleiten von Stickstoff wird auf 150° C erhitzt und es wird innerhalb von 5 Stunden ein Gemisch aus

45,0 Teilen des nach a) erhaltenen Addukts
33,0 Teilen Methylmethacrylat
12,0 Teilen 2-Äthylhexylacrylat
15,0 Teilen n-Butylacrylat
2,6 Teilen tert.-Butylperbenzoat und
2,1 Teilen Di-tert.-butylperoxid

zudosiert und noch eine weitere Stunde lang bei 150° C gerührt. Die gebildete 80%ige Copolymerisatlösung hat bei 25° C eine dynamische Viskosität von etwa 3500 m Pa · s.

#### c) Herstellung eines weißpigmentierten Lackes

100 Teile der nach b) erhaltenen Copolymerisatlösung und
80 Teile eines Titandioxidpigments vom Rutiltyp

werden durch 30minütiges Mahlen auf einer Perlmühle homogenisiert. Die erhaltene Dispersion wird mit
42 Teilen der im Beispiel 2 c) verwendeten Polyisocyanat-Lösung und
2 Teilen einer 1%igen Lösung eines Silikonöls in Shellsol A

versetzt und mit Xylol und n-Butylacetat im Verhältnis 3 : 4 auf Spritzviskosität verdünnt.

### d) Applikation des Lackes und Eigenschaften des eingebrannten Lackfilms

Der nach c) erhaltene Lack wird durch Spritzen auf doppelt decapierte Tiefziehbleche aufgetragen, während 10 Minuten staubfrei abgelüftet und 30 Minuten lang bei 150° C eingebrannt. Der etwa 35 μm dicke Lackfilm hatte folgende Eigenschaften:

| | |
|---|---|
| Tiefziehfestigkeit nach Erichsen: | 8,0 mm |
| Kugelschlagtiefung: | 100 kg · cm |
| Gitterschnitt-Kennwert: | 0 |
| Pendelhärte nach König: | 157 Sekunden |

Die Beständigkeit des Lackfilms gegen Chemikalien bzw. Lösungsmittel und die Wetterechtheit entsprachen den Angaben im Beispiel 1 d).

### Beispiel 5

#### a) Herstellung eines Adduktes aus 2-Hydroxypropylmethacrylat und ε-Caprolacton

In einem mit Rührer, Thermometer, Tropftrichter, Rückflußkühler und regelbarer Heizung versehenen Reaktionsgefäß werden

45,7 Teile   2-Hydroxypropylmethacrylat (stabilisiert mit 350 ppm Hydrochinonmonomethyläther) und
0,012 Teile  Dibutylzinnoxid

vorgelegt. Unter intensivem Durchleiten von Luft wird auf 105° C erhitzt und es werden innerhalb von 1 Stunde

54,29 Teile   ε-Caprolacton
über den Tropftrichter zudosiert.
Es wird noch 3 Stunden unter Rühren auf 115° C geheizt.

#### b) Herstellung eines (Meth)acrylatharzes

In einem mit Rührer, Thermometer, Tropftrichter, Rückflußkühler und regelbarer Heizung versehenen Reaktionsgefäß werden

25,0 Teile   eines Lösungsmittelgemisches aus 2 Teilen Äthylglykolacetat und 5 Teilen Xylol

vorgelegt. Unter Durchleiten von Stickstoff wird auf 150° C erhitzt und es wird innerhalb von 4 Stunden ein Gemisch aus

55,0 Teilen   des nach a) erhaltenen Addukts
18,0 Teilen   Methylmethacrylat
27,0 Teilen   n-Butylacrylat und
4,0 Teilen   tert.-Butylperbenzoat

zudosiert. Anschließend werden weitere

0,5 Teile   tert.-Butylperbenzoat

zugesetzt und es wird noch eine weitere Stunde bei 150° C gerührt. Die gebildete 80%ige Copolymerisatlösung hat bei 25° C eine dynamische Viskosität von 8500 m Pa · s.

#### c) Herstellung eines weißpigmentierten Lackes

100 Teile   der nach b) erhaltenen Copolymerisatlösung und
70 Teile   eines Titandioxidpigments vom Rutiltyp

werden durch 30minütiges Mahlen auf einer Perlmühle homogenisiert. Die erhaltene Dispersion wird mit
41 Teilen   der im Beispiel 1 c) verwendeten Polyisocyanat-Lösung und
2 Teilen   einer 1%igen Lösung eines Silikonöls in Xylol

versetzt und mit Xylol und n-Butylacetat im Verhältnis 5 : 4 auf Spritzviskosität verdünnt.

### d) Applikation des Lackes und Eigenschaften des eingebrannten Lackfilms

Der nach c) erhaltene Lack wird durch Spritzen auf doppelt decapierte Tiefziehbleche aufgetragen, während 10 Minuten staubfrei abgelüftet und 30 Minuten lang bei 150°C eingebrannt. Der etwa 35 μm dicke Lackfilm hatte folgende Eigenschaften:

| | |
|---|---|
| Tiefziehfestigkeit nach Erichsen: | 7,5 mm |
| Kugelschlagtiefung: | 100 kg · cm |
| Gitterschnitt-Kennwert: | 0—1 |
| Pendelhärte nach König: | 150 Sekunden |

Die Beständigkeit des Lackfilms gegen Chemikalien bzw. Lösungsmittel und die Wetterechtheit entsprachen den Angaben im Beispiel 1 d).

### Beispiel 6

#### a) Herstellung eines Adduktes aus 2-Hydroxypropylacrylat und $\varepsilon$-Caprolacton

In einem mit Rührer, Thermometer, Tropftrichter, Rückflußkühler und regelbarer Heizung versehenen Reaktionsgefäß werden

53,2 Teile     2-Hydroxypropylacrylat (stabilisiert mit 625 ppm Hydrochinonmonomethyläther) und
0,041 Teile   Dibutylzinnglykolat

vorgelegt. Unter intensivem Durchleiten von Luft wird auf 95°C erhitzt und es werden innerhalb von 3 Stunden

46,76 Teile     $\varepsilon$-Caprolacton

über den Tropftrichter zudosiert.
   Es wird noch 3 Stunden unter Rühren auf 115°C geheizt.

#### b) Herstellung eines (Meth)acrylatharzes

In einem mit Rührer, Thermometer, Tropftrichter, Rückflußkühler und regelbarer Heizung versehenen Reaktionsgefäß werden

25,0 Teile     eines Lösungsmittelgemisches aus 3 Teilen Äthylglykolacetat und 2 Teilen Shellsol A

vorgelegt. Unter Durchleiten von Stickstoff wird auf 150°C erhitzt und es wird innerhalb von 6 Stunden ein Gemisch aus

| | |
|---|---|
| 46,0 Teilen | des nach a) erhaltenen Addukts |
| 16,0 Teilen | **Methylmethacrylat** |
| 20,0 Teilen | **2-Äthylhexylacrylat** |
| 15,3 Teilen | **Styrol** |
| 2,7 Teilen | **2-Hydroxyäthylacrylat** und |
| 3,5 Teilen | **tert.-Butylperbenzoat** |

zudosiert. Anschließend werden weitere

0,6 Teile     tert.-Butylperbenzoat

zugesetzt und es wird noch eine weitere Stunde lang bei 150°C gerührt. Die gebildete 60%ige Copolymerisatlösung hat bei 25°C eine dynamische Viskosität von 3200 m Pa · s.

#### c) Herstellung eines weißpigmentierten Lackes

| | |
|---|---|
| 100 Teile | der nach b) erhaltenen Copolymerisatlösung und |
| 70 Teile | eines Titandioxidpigments vom Rutiltyp |

werden durch 30minütiges Mahlen auf einer Perlmühle homogenisiert. Die erhaltene Dispersion wird mit

| 38 Teilen | der im Beispiel 1 c) verwendeten Polyisocyanat-Lösung und |
| 2 Teilen | einer 1%igen Lösung eines Silikonöls in Shellsol A |

versetzt und mit Xylol und n-Butylacetat im Verhältnis 5 : 6 auf Spritzviskosität verdünnt.

### d) Applikation des Lackes und Eigenschaften des eingebrannten Lackfilms

Der nach c) erhaltene Lack wird durch Spritzen auf doppelt decapierte Tiefziehbleche aufgetragen, während 10 Minuten staubfrei abgelüftet und 30 Minuten lang bei 150°C eingebrannt. Der etwa 38 μm dicke Lackfilm hatte folgende Eigenschaften:

| Tiefziehfestigkeit nach Erichsen: | 7,5 mm |
| Kugelschlagtiefung: | 100 kg · cm |
| Gitterschnitt-Kennwert: | 0—1 |
| Pendelhärte nach König: | 165 Sekunden |

Die Beständigkeit des Lackfilms gegen Chemikalien bzw. Lösungsmittel und die Wetterechtheit entsprachen den Angaben im Beispiel 1 d).

### Beispiel 7

#### a) Herstellung eines Addukts aus 4-Hydroxybutylacrylat und ε-Caprolacton

In einem mit Rührer, Thermometer, Tropftrichter, Rückflußkühler und regelbarer Heizung versehenen Reaktionsgefäß werden

| 45,27 Teile | 4-Hydroxybutylacrylat (stabilisiert mit 500 ppm Hydrochinonmonomethyläther) und |
| 0,023 Teile | Dibutylzinnoxid |

vorgelegt. Unter intensivem Durchleiten von Luft wird auf 120°C erhitzt und es werden innerhalb von 2 Stunden

| 54,7 Teile | ε-Caprolacton |

über den Tropftrichter zudosiert.
Es wird noch 3 Stunden unter Rühren auf 120°C geheizt.

#### b) Herstellung eines (Meth)acrylatharzes

In einem mit Rührer, Thermometer, Tropftrichter, Rückflußkühler und regelbarer Heizung versehenen Reaktionsgefäß werden

| 33,33 Teile | eines Lösungsmittelgemisches aus 1 Teil Äthylglykolacetat und 5 Teilen Xylol |

vorgelegt. Unter Durchleiten von Stickstoff wird auf 140°C erhitzt und es wird innerhalb von 4,5 Stunden ein Gemisch aus

| 40,0 Teilen | des nach a) erhaltenen Addukts |
| 21,0 Teilen | Methylmethacrylat |
| 21,0 Teilen | 2-Äthylhexylacrylat |
| 12,0 Teilen | Styrol |
| 6,0 Teilen | 2-Hydroxyäthylacrylat und |
| 4,0 Teilen | tert.-Butylperacetat |

zudosiert. Anschließend werden weitere

| 0,4 Teile | tert.-Butylperacetat |

zugesetzt und es wird noch 45 Minuten lang bei 140°C gerührt. Die gebildete 75%ige Copolymerisatlösung hat bei 25°C eine dynamische Viskosität von 6700 m Pa · s.

14

# 0 044 393

### c) Herstellung eines weißpigmentierten Lackes

| 100 Teile | der nach b) erhaltenen Copolymerisatlösung und |
| 70 Teile | eines Titandioxidpigments vom Rutiltyp |

werden durch 30minütiges Mahlen auf einer Perlmühle homogenisiert. Die erhaltene Dispersion wird mit

| 48 Teilen | der im Beispiel 1 c) verwendeten Polyisocyanat-Lösung und |
| 3 Teilen | einer 1%igen Lösung eines Silikonöls in Xylol |

versetzt und mit Xylol und n-Butylacetat im Verhältnis 8 : 7 auf Spritzviskosität verdünnt.

### d) Applikation des Lackes und Eigenschaften des eingebrannten Lackfilms

Der nach c) erhaltene Lack wird durch Spritzen auf doppelt decapierte Tiefziehbleche aufgetragen, während 10 Minuten staubfrei abgelüftet und 30 Minuten lang bei 150° C eingebrannt. Der etwa 35 μm dicke Lackfilme hatte folgende Eigenschaften:

| Tiefziehfestigkeit nach Erichsen: | 8,0 mm |
| Kugelschlagtiefung: | 100 kg · cm |
| Gitterschnitt-Kennwert: | 0−1 |
| Pendelhärte nach König: | 156 Sekunden |

Die Beständigkeit des Lackfilms gegen Chemikalien bzw. Lösungsmittel und die Wetterechtheit entsprachen den Angaben im Beispiel 1 d).

### Beispiel 8

### a) Herstellung eines Addukts aus 2-Hydroxyäthylacrylat und ε-Caprolacton

Es wird verfahren wie im Beispiel 1 a).

### b) Herstellung eines (Meth)acrylatharzes

In einem mit Rührer, Thermometer, Tropftrichter, Rückflußkühler und regelbarer Heizung versehenen Reaktionsgefäß werden

| 20 Teile | Xylol |
| 10 Teile | n-Butylacetat |
| 10 Teile | Shellsol A |

vorgelegt. Unter Durchleiten von Stickstoff wird auf eine Temperatur von 100° C erhitzt und es wird innerhalb von 3 Stunden ein Gemisch aus

| 15,0 Teilen | des nach a) erhaltenen Addukts |
| 75,0 Teilen | Methylmethacrylat |
| 10,0 Teilen | n-Butylacrylat |
| 3,0 Teilen | n-Dodecylmercaptan |
| 1,0 Teil | Isopropylpercarbonat |
| 1,5 Teilen | t-Butylperpivalat |
| 1,5 Teilen | t-Butylperoctoat |

zudosiert. Anschließend werden weitere

| 0,5 Teile | t-Butylperoctoat |

zugesetzt und es wird noch weitere 2 Stunden bei 105° C nachgeheizt.

15

**0 044 393**

c) Herstellung eines weißpigmentierten Lackes

| | |
|---|---|
| 100 Teile | der nach b) erhaltenen 60%igen Copolymerisatlösung und |
| 30 Teile | eines Titandioxidpigments vom Rutiltyp |

werden auf einem Dreiwalzenstuhl angerieben. Die gebildete Dispersion wird mit

| | |
|---|---|
| 11 Teilen | einer 75%igen Lösung eines polyfunktionellen aliphatischen Isocyanats auf der Grundlage des Hexamethylendiisocyanats (Handelsprodukt Desmodur N der Firma Bayer) in einem Lösungsmittelgemisch aus 1 Teil Äthylglykolacetat und 1 Teil Xylol (Gehalt an NCO-Gruppen 16,5%) und |
| 1 Teil | einer 1%igen Lösung eines Silikonöls in Shellsol A |

versetzt und mit

| | |
|---|---|
| 60 Teilen | eines Lösungsmittelgemisches aus Xylol, n-Butylacetat, Shellsol A im Verhältnis 2 : 1 : 1 |

auf Spritzviskosität verdünnt.

d) Applikation des Lackes und Eigenschaften des eingebrannten Lackfilms

Der nach c) erhaltene Lack wird durch Spritzen auf doppelt decapierte Tiefziehbleche aufgetragen, während 10 Minuten staubfrei abgelüftet und 30 Minuten lang bei 80° C eingebrannt. Der etwa 25 µm dicke Lackfilm hatte nachstehende Eigenschaften:

| | |
|---|---|
| Tiefziehfestigkeit nach Erichsen: | 8 mm |
| Kugelschlagtiefung: | 50 kg · cm |
| Gitterschnitt-Kennwert: | 0—1 |
| Pendelhärte nach König: | 155 Sekunden |

Beispiel 9

a) Herstellung eines Addukts aus 2-Hydroxyäthylacrylat und $\varepsilon$-Caprolacton

Es wird verfahren wie in Beispiel 1 a).

b) Herstellung eines (Meth)acrylatharzes

In einem mit Rührer, Thermometer, Tropftrichter, Rückflußkühler und regelbarer Heizung versehenen Reaktionsgefäß werden

| | |
|---|---|
| 20 Teile | Xylol |
| 10 Teile | n-Butylacetat |
| 10 Teile | Shellsol A |

vorgelegt. Unter Durchleiten von Stickstoff wird auf eine Temperatur von 110° C erhitzt und es wird innerhalb von 3 Stunden ein Gemisch aus

| | |
|---|---|
| 28 Teilen | des nach a) erhaltenen Adduktes |
| 72 Teilen | Methylmethacrylat |
| 3,5 Teilen | Dodecylmercaptan |
| 0,5 Teilen | Isopropylpercarbonat |
| 2,0 Teilen | t-Butylperpivalat |
| 1,5 Teilen | t-Butylperoctoat |

zudosiert. Anschließend werden weitere

| | |
|---|---|
| 0,5 Teile | t-Butylperoctoat |

zugesetzt und es wird noch weitere $2^1/_2$ Stunden bei 105° C nachgeheizt.

16

# 0 044 393

c) Herstellung eines weißpigmentierten Lackes

100 Teile der nach b) erhaltenen 60%igen Copolymerisatlösung und
32 Teile eines Titandioxidpigments vom Rutiltyp

werden auf einem Dreiwalzenstuhl angerieben. Die gebildete Dispersion wird mit

20 Teilen einer 75%igen Lösung eines polyfunktionellen aliphatischen Isocyanats auf der Grundlage des Hexamethylendiisocyanats (Handelsprodukt Desmodur N der Firma Bayer) in einem Lösungsmittelgemisch aus 1 Teil Äthylglykolacetat und 1 Teil Xylol (Gehalt an NCO-Gruppen 1,5%) und
1 Teil einer 1%igen Lösung eines Silikonöls in Shellsol A

versetzt und mit

70 Teilen eines Lösungsmittelgemisches aus Xylol, n-Butylacetat, Shellsol A im Verhältnis 2 : 1 : 1

auf Spritzviskosität verdünnt.

d) Applikation des Lackes und Eigenschaften des eingebrannten Lackfilms

Der nach c) erhaltene Lack wird durch Spritzen auf doppelt decapierte Tiefziehbleche aufgetragen, während 15 Minuten staubfrei abgelüftet und 30 Minuten lang bei 130° C eingebrannt.
Der etwa 35 μm dicke Lackfilm hatte nachstehende Eigenschaften:

Tiefziehfestigkeit nach Erichsen: 9 mm
Kugelschlagtiefung: 100 kg · cm
Gitterschnitt-Kennwert: 0−1
Pendelhärte nach König: 175 Sekunden.

## Patentanspruch

Verfahren zur Herstellung eines Hydroxylgruppen aufweisenden, mit $\varepsilon$-Caprolacton modifizierten, mit mehrwertigen Isocyanaten vernetzbaren (Meth)acrylatharzes, dadurch gekennzeichnet, daß man

1. mindestens einen Monoester der Acryl- oder Methacrylsäure mit einem Alkandiol mit 2 bis 4 Kohlenstoffatomen im molaren Verhältnis von 1,5 : 1 bis 1 : 3 mit $\varepsilon$-Caprolacton bei einer Temperatur zwischen 60 und 130°C in Gegenwart von 0,005 bis 0,15 Gewichtsprozent, bezogen auf das Gewicht des eingesetzten $\varepsilon$-Caprolactons, einer als Katalysator für die Umsetzung von Hydroxylgruppen aufweisenden Verbindungen mit $\varepsilon$-Caprolacton an sich bekannten Organozinnverbindung zur Reaktion bringt und
2. a) 15 bis 55 Gewichtsprozent des nach 1. erhaltenen Adduktes mit
   b) 45 bis 85 Gewichtsprozent eines Monomerengemisches, welches seinerseits zusammengesetzt ist aus, jeweils bezogen auf das Gewicht der Komponente b),
      b₁) 10 bis 90 Gewichtsprozent mindestens eines Esters der Methacrylsäure, dessen Homopolymerisat eine Glasübergangstemperatur von über 60° C aufweist,
      b₂) 10 bis 90 Gewichtsprozent mindestens eines Esters der Acryl- oder Methacrylsäure, dessen Homopolymerisat eine Glasübergangstemperatur unter 60° C aufweist,
      b₃) 0 bis 35 Gewichtsprozent mindestens eines Vinylaromaten und
      b₄) 0 bis 10 Gewichtsprozent mindestens eines Monoesters der Acryl- oder Methacrylsäure mit einem Alkandiol mit 2 bis 4 Kohlenstoffatomen
   als Lösung in
   c) 24,76 bis 66,67 Gewichtsprozent, bezogen auf das Gesamtgewicht der Komponenten a) und b), mindestens eines für Lacke auf (Meth)acrylatharz-Basis üblichen und gegenüber Isocyanaten inerten Lösungsmittels in Gegenwart mindestens eines an sich bekannten, thermisch in Radikale zerfallenden Katalysators
   copolymerisiert.

## Claim

A process for the production of a (meth)acrylate resin having hydroxyl groups which is cross-linkable with polyvalent isocyanates and is modified with $\varepsilon$-caprolactone, characterised in that

17

1. at least one monoester of acrylic or methacrylic acid with an alkane diol having from 2 to 4 carbon atoms is reacted with $\varepsilon$-caprolactone in a molar ration of from 1 : 5 : 1 to 1 : 3 at a temperature of from 60 to 130°C in the presence of from 0.005 to 0.15% by weight based on the weight of the $\varepsilon$-caprolactone which is used, of an organo tin compound which is known as a catalyst for the reaction of compounds having hydroxyl groups with $\varepsilon$-caprolactone and

2. a) from 15 to 55% by weight of the adduct which is obtained according to 1. is copolymerised with
   b) from 45 to 85% by weight of a monomer mixture, consisting of, in each case based on the weight of component b),
      $b_1$) from 10 to 90% by weight of at least one ester of methacrylic acid, the homopolymer of which has a glass transition temperature above 60°C,
      $b_2$) from 10 to 90% by weight of at least one ester of acrylic or methacrylic acid, the homopolymer of which has a glass transition temperature below 60°C,
      $b_3$) from 0 to 35% by weight of at least one vinyl aromatic monomer and
      $b_4$) from 0 to 10% by weight of at least one monoester of acrylic or methacrylic acid with an alkane diol having from 2 to 4 carbon atoms
   as a solution in
   c) from 24.76 to 66.67% by weight, bases on the total weight of constituents a) and b), of at least one isocyanate-inert solvent which is conventional for lacquers which are based on (meth)acrylate resin, in the presence of at least one known catalyst which decomposes thermally into radicals.

## Revendication

Procédé de préparation d'une résine (méth) acrylique présentant des groupes hydroxyle, modifiée avec du caprolactone- $\varepsilon$ et réticulable par des isocyanates polyvalents, procédé caractérisé en ce que:

1. l'on fait réagir au moins un monvester de l'acide acrylique ou méthacrylique, formé avec un alcanediol comportant 2 à 4 atomes de carbone, dans un rapport molaire de 1,5 : 1 à 1 : 3, avec le caprolactone- $\varepsilon$ à une température comprise entre 60 et 130°C, en présence de 0,005 à 0,5% en poids, calculé sur le poids du caprolactone- $\varepsilon$ mis en oeuvre, d'un composé organique de l'étain connu en soi, comme catalyseur de la réaction du composé présentant des groupes hydroxyle, avec le caprolactone- $\varepsilon$, et on copolymérise:

2. a) 15 à 55% en poids de l'adduct obtenu en 1. avec
   b) 45 à 85% en poids d'un mélange de monomères qui se compose pour sa part des proportions suivantes, calculées sur le poids des composants b), de:
      $b_1$) 10 à 90% en poids d'au moins un ester de l'acide méthacrylique, dont l'homopolymère présente une température de vitrification supérieure à 60°C,
      $b_2$) 10 à 90% en poids d'au moins un ester de l'acide acrylique ou méthacrylique, dont l'homopolymère présente une température de vitrification inférieure à 60°C,
      $b_3$) 0 à 35% en poids d'un composé vinylique aromatique et
      $b_4$) 0 à 10% en poids d'au moins un monoester de l'acide acrylique ou méthacrylique, formé avec un alcanediol comportant 2 à 4 atomes de carbone,
   en solution dans:
   c) 24,76 à 66,67% en poids, calculé sur le poids total des composants a) et b), d'au moins un solvant habituel des vernis à base de résine méthacrylique et inerte vis-à-vis des isocyanates, en présence d'au moins un catalyseur connu en soi, se décomposant en radicaux sous l'effet de la chaleur.